# EUROPEAN PATENT SPECIFICATION

(11) **EP 1 445 337 B1**
(45) Date of publication and mention of the grant of the patent: **21.12.2011**
(21) Application number: 02770227.3
(22) Date of filing: 27.09.2002
(51) Int. Cl.: C21C 1/02, C21C 7/064

(54) **METHOD FOR DEPHOSPHORIZATION OF MOLTEN IRON**
VERFAHREN ZUR ENTPHOSPHORISIERUNG VON GESCHMOLZENEM EISEN
PROCEDE DE DEPHOSPHORISATION DE FER EN FUSION

(30) Priority: 27.09.2001 JP 2001295875
(43) Date of publication of application: 11.08.2004
(73) Proprietor: Nippon Steel Corporation, Tokyo 100-8071 (JP)
(72) Inventor: HIRATA, Hiroshi, C/O NIPPON STEEL CORP., Muroran-shi, Hokkaido 050-0087 (JP); ISHII, Hiromi, C/O NIPPON STEEL CORP., Muroran-shi, Hokkaido 050-0087 (JP); HAYASHI, Hiroaki, C/O NIPPON STEEL CORP., Muroran-shi, Hokkaido 050-0087 (JP); OGAWA, Yuji, C/O NIPPON STEEL CORP., Futtsu-shi, Chiba 293-8511 (JP); SASAKI, Naoto, C/O NIPPON STEEL CORP. Tech. Dev., Futtsu-shi, Chiba 293-8511 (JP)
(74) Representative: Vossius & Partner
(86) International application number: PCT/JP2002/010105
(87) International publication number: WO 2003/029497

(56) References cited:
- EP-A- 0 043 238
- EP-A- 0 714 989
- EP-A1- 0 714 989
- JP-A- 1 215 916
- JP-A- 2 070 014
- JP-A- 2 093 011
- KISHIDA T, ET. AL,: "Construction and Operation of Hot Metal Dephosphorization Plant at the Wakayama Steel Works" THE SUMITOMO SEARCH, SUMITOMO METAL INDUSTRIES, vol. 33, November 1986 (1986-11), pages 9-15, XP009010700 TOKIO, JAPAN
- PATENT ABSTRACTS OF JAPAN vol. 018, no. 328 (C-1215), 22 June 1994 (1994-06-22) -& JP 06 073427 A (NIPPON STEEL CORP), 15 March 1994 (1994-03-15)
- PATENT ABSTRACTS OF JAPAN vol. 007, no. 086 (C-161), 9 April 1983 (1983-04-09) -& JP 58 016009 A (SHIN NIPPON SEITETSU KK), 29 January 1983 (1983-01-29)
- PATENT ABSTRACTS OF JAPAN vol. 013, no. 529 (C-658), 27 November 1989 (1989-11-27) -& JP 01 215916 A (NIPPON STEEL CORP), 29 August 1989 (1989-08-29)
- PATENT ABSTRACTS OF JAPAN vol. 014, no. 250 (C-0723), 29 May 1990 (1990-05-29) -& JP 02 070014 A (NIPPON STEEL CORP), 8 March 1990 (1990-03-08)

## Description

### Field of the Invention

The present invention relates to a process for dephosphorizing a hot metal, using a refining vessel having a top-and-bottom-blowing function, wherein oxygen is top blown and a flux is injected by bottom blowing.

### Background Art

A pretreatment process for a hot metal wherein a hot metal is desiliconized and dephosphorized prior to decarbonization in a vessel different from a vessel in which the hot metal is decarbonized has come to be employed in place of the converter process by which a hot metal is desiliconized, dephosphorized and decarbonized in the same converter. It has been a common practice in the pretreatment of a hot metal to desiliconize the hot metal by adding solid oxygen sources such as iron oxide thereto, and then to conduct dephosphorization refining by adding a flux for dephosphorization thereto. In dephosphorization refining, a lime source as a flux is added to the hot metal to form a dephosphorizing slag with high basicity, and then a solid oxygen source including iron oxide is added thereto, also as a flux, to effect dephosphorization. Moreover, the following procedure has been conducted as pre-dephosphorization: a flux for dephosphorization is injected into a hot metal in a torpedo car or a ladle that is used as a refining vessel for pre-dephosphorization.

Pretreatment of a hot metal by which desiliconization and dephosphorization are simultaneously conducted has recently been employed using a converter type refining vessel having a top-and-bottom-blowing function as a pretreatment vessel for a hot metal. Because strong stirring caused by top and bottom blowing is utilized, dephosphorization of a hot metal can be promoted even when a slag with low basicity is used. As a result, desiliconization and dephosphorization can be conducted simultaneously. Because gaseous oxygen can be used as an oxygen source, the hot metal temperature subsequent to the pretreatment can be held high in comparison with a conventional method in which solid oxygen alone is used. As a result, the heat margin in the entire refining including decarbonization can be ensured. A flux for pretreatment refining can be added to a hot metal by an injection method by which a flux is blown into a hot metal with a bottom blowing gas used as a carrier gas in addition to a method by which a flux is added thereto from the top of the refining vessel. The efficiency of dephosphorization in the pretreatment can be improved by employing flux blowing.

Japanese Patent No. 2,958,848 describes a refining method comprising first conducting dephosphorization refining in a top-and-bottom-blowing converter, discharging a slag, and then conducting decarbonization in the same converter. In the dephosphorization step, a dephosphorizing reaction is promoted by making the sum of an iron component in iron oxide and a manganese oxide concentration (T. Fe + MnO) fall in a range from 15 to 35% under the condition that CaO/SiO₂ is not greater than 2.5 in the slag. The dephosphorization is conducted by blowing a flux, containing burnt lime powder as a base component, from a bottom-blowing tuyere with an inert gas as a carrier gas. The dephosphorizing reaction rate can be increased by mixing iron oxide powder with the burnt lime powder or blowing oxygen gas through the same tuyere. Alternatively, the dephosphorization can also be promoted by blowing oxygen gas from a top-blowing lance, and adding a flux from the top by charging, inject, blowing or the like procedure so that the iron oxide concentration in the formed slag is controlled.

In dephosphorization by inject a flux using a top-and-bottom-blowing converter, an oxygen source can be compositely added during dephosphorization by top blowing oxygen and adding iron oxide and gaseous oxygen through a bottom-blowing nozzle. Accordingly, selection of the proportion of oxygen added by bottom blowing becomes a problem. The ratio of a CaO mass in the flux blown with a carrier gas to a total mass of oxygen contained in iron oxide in the flux and oxygen contained in the carrier gas is herein defined as a CaO/O ratio.

Japanese Unexamined Patent Publication (Kokai) No. 60-26608 describes that, when the CaO/O ratio is made to fall in a range from 1.5 to 2.5, the efficiency of utilizing burnt lime and oxygen for dephosphorization becomes the greatest, and consequently a high dephosphorization ratio is obtained.

Japanese Unexamined Patent Publication (Kokai) No. 2000-212622 discloses as follows. When the CaO/O ratio is greater than 1.0, burnt lime is used during dephosphorization in an amount more than necessary. As a result, the dephosphorizing reaction itself proceeds. However, the dephosphorization efficiency is lowered. The patent publication therefore concludes that an appropriate range of the CaO/O ratio is from 0.5 to 1.0.

In the dephosphorization method in which a top-and-bottom-blowing converter is used, a CaO/O ratio of 2.5 or less has been employed on the basis of the above discovery.

A lower hot metal temperature is more advantageous in order to promote a dephosphorizing reaction. However, for example, dephosphorization at temperature as low as 1,350°C or lower results in poor slag formation when the CaO/SiO₂ ratio becomes not smaller than 1.8 when the CaO/SiO₂ ratio fall in a range up to 2.5. As a result, a problem of retardation of dephosphorization arises. Fluorite must therefore be added for the purpose of promoting slag formation.

When fluorite is used during refining, refractories of a refining vessel used for pretreatment and decarbonization show a drastic melt loss. For example, as shown in Fig. 6 in Japanese Unexamined Patent Publication (Kokai) No. 8-157921, the refractory melt loss index increases with an increase in a fluorine concentration in the slag, and the refractory melt loss is known to drastically increase. Accordingly, fluorite is preferably not used in view of extending the life of the refractories.

An object of the present invention is to provide a dephosphorizing process capable of conducting excellent dephosphorization without using fluorite when dephosphorizing a hot metal, by top blowing oxygen and injecting a flux by bottom blowing, using a refining vessel having a top-and-bottom-blowing function.

### Disclosure of the Invention

The present invention has been made to achieve the above object, and the subject matter of the invention is as described below.
(1) A process for dephosphorizing a hot metal using a refining vessel having a top-and-bottom-blowing function wherein oxygen is top blown into a hot metal, and a flux containing as a major component a component that is one or at least two substances selected from burnt lime, limestone and iron oxide and that contains at least iron oxide is injected, thereinto by bottom blowing with oxygen, an inert gas or a mixture of the two gases used as a carrier gas, characterized by that the process including the step of blowing the flux into a hot metal in such a manner that the ratio of a mass of CaO in the blown flux to a total mass of oxygen (CaO/O) contained in iron oxide in the blown flux and in the carrier gas exceeds 2.5
(2) A process for dephosphorizing a hot metal using a refining vessel having a top-and-bottom-blowing function wherein oxygen is top blown into a hot metal, and a flux containing as a major component a component that is one or at least two substances selected from burnt lime, limestone and iron oxide and that contains at least iron oxide is injected thereinto by bottom blowing with oxygen, an inert gas or a mixture of the two gases used as a carrier gas, characterized by that the process including the step of blowing in such a manner that the proportion of solid oxygen based on the entire oxygen added falls in a range from 5 to 40% by mass.
(3) A process for dephosphorizing a hot metal using a refining vessel having a top-and-bottom-blowing function wherein oxygen is top blown into a hot metal, and a flux containing as a major component a component that is one or at least two substances selected from burnt lime, limestone and iron oxide and that contains at least iron oxide is injected thereinto by bottom blowing with oxygen, an inert gas or a mixture of the two gases used as a carrier gas, characterized by that the process including the step of blowing the flux into a hot metal in such a manner that the ratio of a mass of CaO in the blown flux to a total mass of oxygen (CaO/O) contained in iron oxide in the blown flux and in the carrier gas exceeds 2.5, and that the proportion of solid oxygen based on the entire oxygen added falls in a range from 5 to 40% by mass.
(4) The process for dephosphorizing a hot metal according to any one of (1) to (3) described above, wherein the CaO/SiO₂ ratio in the slag at the time of finishing dephosphorization is made to fall in a range up to 2.5, and the sum of the iron component of iron oxide and the concentration of manganese oxide (T. Fe + MnO) in the slag is made to fall in a range from 15 to 35% by mass.
(5) The process for dephosphorizing a hot metal according to any one of (1) to (4) described above, wherein fluorite is not used for the flux.

### Brief Description of the Drawings

Fig. 1 is a graph showing the relationship between a CaO/O ratio and [P] after dephosphorization.
Fig. 2 is a view showing a top-and-bottoni-blowing converter used for dephosphorizing a hot metal in the present invention.

### Best Mode for Carrying Out the Invention

First, the process according to (1), mentioned above, of the present invention will be explained. In addition, in the present specification, all the proportions and percentages (%) represent mass portions and % by mass, respectively.

Using a 1-ton scale top-and-bottom-blowing converter, the influence of a mixing ratio of a blown flux on the dephosphorizing reaction was investigated. A mixture of burnt lime powder and sintered dust powder shown in Table 1 was used as a blown flux. An oxygen amount in iron oxide per 1 kg of the sintered dust was 0.2 kg. The mixing ratio of the burnt lime powder and the sintered dust was varied so that the ratio (CaO/O) of a CaO mass to an oxygen mass in iron oxide in the blown flux was varied from 0.8 to 22, and the most appropriate CaO/O ratio was evaluated.

A hot metal having components and a temperature shown in Table 2 was charged into a converter, and the above flux was injected from the bottom-blowing tuyere with a nitrogen gas, as a carrier gas, while oxygen was being top blown. The unit requirement of the charged flux was determined to be 15 kg/ton. In addition, the target slag basicity (CaO/SiO₂) (mass ratio) after the treatment was determined to be 1.7. When injected CaO alone was insufficient, lamp of burnt lime having a size of up to 25 mm was added from the top of the converter. Moreover, the hot metal temperature subsequent to dephosphorization was adjusted to be from 1,335 to 1,340°C. The total oxygen unit requirement that is the sum of top blown oxygen and oxygen in flux iron oxide was 17 Nm³/ton, and the mass ratio of oxygen in the flux iron oxide to the entire oxygen, namely, the solid oxygen proportion was determined to be 20%. The iron oxide concentration in the slag subsequent to the treatment was adjusted, by adjusting the height of the top-blowing lance, in such a manner that the sum of an iron component of the iron oxide and a manganese oxide concentration (T. Fe + MnO) in terms of % by mass fell in the following three cases: 8-11%; 22-27%; and 38-41%.

**Table 1**

| T. Fe | CaO | Al₂O₃ | SiO₂ |
|---|---|---|---|
| 46.7% | 6.0% | 2.5% | 5.2% |

| | | | |
|---|---|---|---|
| (% by mass) | | | |

**Table 2**

| Initial temp. | [C] | [Si] | [P] |
|---|---|---|---|
| 1,250°C | 4.6% | 0.35% | 0.10% |

| | | | |
|---|---|---|---|
| (% by mass) | | | |

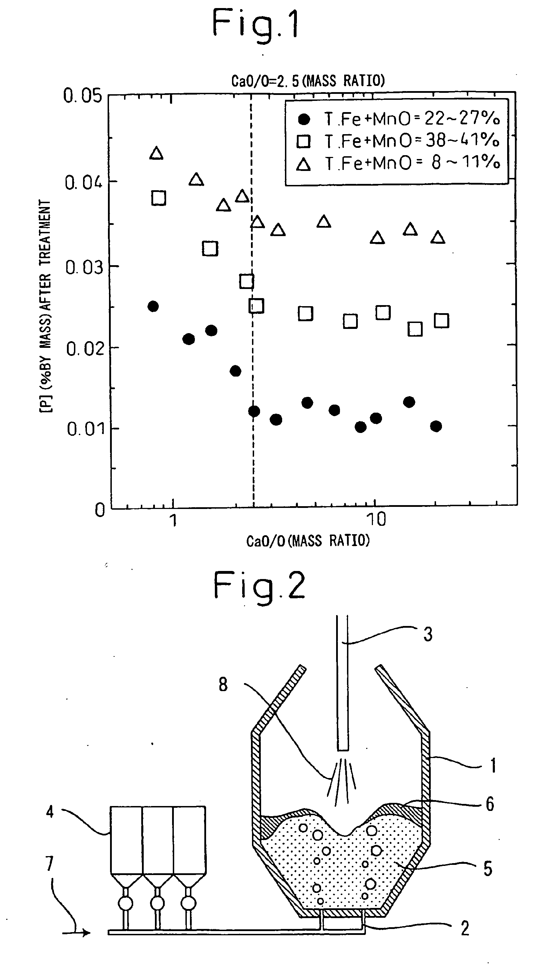

Fig. 1 shows the relationship between a CaO/O ratio and [P] subsequent to the treatment. In Fig. 1, a datum point obtained when (T. Fe + MnO) fell in the range from 8 to 11% is indicated by the mark Δ, a datum point obtained when (T. Fe + MnO) fell in the range from 22 to 27% is indicated by the mark ●, and a datum point obtained when (T. Fe + MnO) fell in the range from 38 to 41% is indicated by the mark □. It has been found that for the above three cases, [P] subsequent to the treatment was stabilized at a low value when the CaO/O ratio of the blown flux fell in a region exceeding 2.5. Moreover, the treatment in the case in which (T. Fe + MnO) fell in the range from 22 to 27% showed good dephosphorizing capability, and the treatment in the other cases resulted in insufficiently lowered [P] subsequent to the treatment.

Although the reasons for the good results given when the CaO/O ratio exceeded 2.5 are not certain, the reasons are considered to be as follows. First, blowing flux produces a dephosphorizing reaction in the hot metal to form a dephosphorization product 3CaO·P₂O₅. The 3CaO·P₂O₅ thus produced can form a solid solution with 2CaO·SiO₂ alone. Accordingly, the blown flux composition is required to simultaneously supply oxygen sufficient to form P₂O₅ and CaO sufficient to form 3CaO·P₂O₅ and 2CaO·SiO₂. The sintered dust contains about 5% of SiO₂ as shown in Table 1. When the CaO/O ratio of the blown flux exceeds 2.5, an amount of CaO supplied is sufficient. CaO and SiO₂ in the sintered dust therefore forms 2CaO·SiO₂, which fixes 3CaO·P₂O₅ to give a high dephosphorizing efficiency. On the other hand, when the CaO/O ratio is up to 2.5, the proportion of SiO₂ supplied from the sintered dust becomes high, and an amount of 2CaO·SiO₂ formed decreases. As a result, the dephosphorizing efficiency lowers. Second, when the flux composition is determined so that the CaO/O ratio becomes as low as a conventional value, an amount of CaO supplied from the blown flux is restricted. An amount of charged lump of burnt lime increases when an attempt is made to keep a CaO/SiO₂ ratio of the slag at about 1.7. Because the slag formation rate of the lump of burnt lime is low, the practical basicity subsequent to dephosphorization lowers due to insufficient slag formation, and the dephosphorization is thought to become poor.

The process according to (1) mentioned above of the present invention has been achieved on the basis of the above discovery. A dephosphorizing process showing a good dephosphorizing efficiency without using fluorite has been realized by blowing a flux into a hot metal in such a manner that the ratio (CaO/O) of a mass of CaO in the blown flux to a total mass of oxygen contained in iron oxide in the blown flux and in the carrier gas exceeds 2.5.

Next, the process according to (2) mentioned above will be explained.

In a process for dephosphorizing a hot metal by top blowing oxygen and injecting a flux by bottom blowing using a refining vessel having a top-and-bottom-blowing function, top blown oxygen gas and gaseous oxygen in the form of oxygen gas contained in the bottom blown gas can be added as oxygen sources. Solid oxygen sources in the form of iron oxide contained in the blown flux and in the form of iron oxide, that is added from the top of the converter, can be added. The mass proportion of oxygen from the solid oxygen source to the entire oxygen to be added is herein termed a solid oxygen proportion.

In addition, the solid oxygen refers to oxygen contained in iron oxide (FeO, Fe₂O₃), and the solid oxygen sources refer to substances containing iron oxide such as a flux, and iron ore, dust and mill scale that are used as coolants.

When a hot metal is desiliconized, dephosphorized, and decarbonized with gaseous oxygen, the reactions are all exothermic ones, and the hot metal temperature is raised. On the other hand, when iron oxide is used as solid oxygen, the related reactions are all endothermic ones. A higher proportion of solid oxygen, to the entire oxygen, therefore lowers a hot metal temperature more after dephosphorization. Although a lower hot metal temperature is more advantageous to the dephosphorizing reaction, an excessively low hot metal temperature rather deteriorates the dephosphorizing capability due to poor slag formation. A suitable hot metal temperature must therefore be maintained by suitably mixing gaseous oxygen in the entire oxygen.

In the process according to (2), mentioned above, of the present invention, the hot metal temperature can be easily controlled during dephosphorization by making the proportion of the solid oxygen to the entire oxygen to be added fall in the range from 5 to 40%. When the proportion of the solid oxygen is less than 5%, the hot metal temperature rises greatly and the dephosphorizing reaction efficiency is deteriorated. On the other hand, when the proportion of the solid oxygen exceeds 40%, the hot metal temperature greatly lowers, and the dephosphorizing reaction efficiency is deteriorated due to poor slag formation. Moreover, when the hot metal temperature is low, the oxidation degree of the slag is hard to control.

The process according to (3), mentioned above, of the present invention is a combination of the processes according to (1) and (2), mentioned above, of the invention, and the effects of (1) and (2) can be simultaneously obtained.

In addition to the processes according to (1) to (3) mentioned above of the present invention, the process according to (4), mentioned above, of the invention controls a CaO/SiO₂ ratio in the slag at the time of finishing dephosphorization to be up to 2.5, and the sum of an iron component in iron oxide and a manganese oxide concentration (T. Fe + MnO) in the slag to be from 15 to 35%. The CaO/SiO₂ ratio is controlled to be up to 2.5 because slag formation becomes poor without adding fluorite when the CaO/SiO₂ ratio exceeds 2.5. Reasons for controlling the sum of an iron component in iron oxide and a manganese oxide concentration (T. Fe + MnO) in the slag to be from 15 to 35% under the condition that CaO/SiO₂ is not greater than 2.5 are as follows. Both the iron oxide and manganese oxide act to oxidize phosphorus in the hot metal so that the phosphorus is removed therefrom and transferred to a slag. In order to promote the dephosphorizing reaction, the sum of the iron component of iron oxide and the manganese oxide concentration in the slag must be controlled to not smaller than 15%. Moreover, when the sum exceeds 35%, a concentration of CaO necessary for stabilizing phosphorus transferred to the slag decreases, and the dephosphorizing reaction is retarded.

The processes according to (1) to (4), mentioned above, of the present invention each have an excellent capability to dephosphorize a hot metal. Necessary dephosphorization can therefore be conducted without using fluorite in the flux as described in the process according to (5), mentioned above, of the present invention.

### Examples

Dephosphorization of the present invention was conducted using a 300-ton scale top-and-bottom-blowing converter as a refining vessel 1 as shown in Fig. 2. A dephosphorizing flux composed of burnt lime powder fed from a flux hopper 4 and sintered ore powder was blown into a hot metal 5 with a nitrogen gas used as a carrier gas 7 through a bottom-blowing nozzle 2; a gaseous oxygen gas 8 was blown to the hot metal 5 through a top-blowing lance 3. The target [P] concentration subsequent to dephosphorization was determined to be up to 0.014%. Because [Si] in the hot metal prior to dephosphorization was 0.35%, a desiliconization reaction proceeded simultaneously during dephosphorization.

An amount of CaO to be blown as a blown flux was determined from the target CaO/O ratio. The entire added CaO was assumed to form a slag 6. A total addition amount of CaO, obtained from an amount of a blown flux and an amount of a top-charged material, was determined from an amount of the hot metal and an initial [Si] concentration in the hot metal so that the basicity (CaO/SiO₂) of the slag became 1.8. The balance, caused by the insufficiently injected CaO, was made up by top charging lump of burnt lime. The lamp of burnt lime had a size from 20 to 50 mm, and the injected burnt lime had a particle size of up to 1.5 mm.

The mass proportion of solid oxygen to the sum of top blown gaseous oxygen and solid oxygen added as iron oxide (solid oxygen proportion) was determined to be 15%. The hot metal temperature subsequent to dephosphorization could thus be brought to the target temperature of 1,340°C. When solid oxygen from sintered ore injected by bottom blowing was insufficient, mill scale was charged from the top of the converter. In part of the comparative examples, a value other than 15% was employed as the solid oxygen proportion.

The iron oxide concentration in the slag was controlled by adjusting the feed rate of oxygen from the top-blowing lance and a lance height, in such a manner that the sum of an iron component in iron oxide and a manganese oxide concentration (T. Fe + MnO) after dephosphorization fell in a range from 15 to 35%. In part of the comparative examples, the sum was adjusted to fall outside the above range to confirm the effect of controlling (T. Fe + MnO).

Table 3 shows the treatment conditions and results.

**Table 3**

| | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|
| Hot metal amt.(t/ch) | 282 | 279 | 281 | 280 | 281 | 278 | 280 | 282 |
| Initial temp. (°C) | 1298 | 1301 | 1301 | 1302 | 1297 | 1300 | 1301 | 1298 |
| Initial [C] (%) | 4.61 | 4.59 | 4.58 | 4.62 | 4.61 | 4.60 | 4.59 | 4.58 |
| Initial [Si] (%) | 0.35 | 0.35 | 0.35 | 0.35 | 0.35 | 0.35 | 0.35 | 0.35 |
| Initial [P] (%) | 0.103 | 0.101 | 0.102 | 0.100 | 0.101 | 0.102 | 0.100 | 0.101 |
| Unit requirement of blown flux (kg/t) | 18 | 18 | 18 | 18 | 18 | 18 | 18 | 40 |
| Ca/O(mass ratio) | 5.4 | 15.5 | 0.87 | 5.4 | 5.4 | 5.4 | 5.4 | 1.49 |
| Unit requirement of lump quick lime (kg/t) | 5.2 | 0 | 12.6 | 5.2 | 5.2 | 5.2 | 5.2 | 5.4 |
| Decided CaO/SiO₂ (mass ratio) | 1.85 | 1.85 | 1.85 | 1.85 | 1.85 | 1.85 | 1.85 | 1.85 |
| Unit requirement of total oxygen (Nm³/t) | 17 | 17 | 17 | 17 | 17 | 17 | 17 | 17 |
| Solid oxygen ratio (mass ratio) | 15 | 15 | 15 | 15 | 15 | 4 | 50 | 26 |
| Addn. amt. of CaF₂ (kg/t) | 0 | 0 | 0.5 | 1.0 | 0 | 0 | 0 | 0 |
| Treating time (min) | 14 | 14 | 14 | 14 | 14 | 14 | 14 | 14 |
| Actual CaO/SiO₂ (mass ratio) | 1.84 | 1.85 | 1.83 | 1.84 | 1.83 | 1.85 | 1.63 | 1.84 |
| (T.Fe+MnO) after treatment (mass%) | 22 | 25 | 23 | 7 | 40 | 31 | 26 | 24 |
| Temp. after treatment (°C) | 1342 | 1341 | 1340 | 1341 | 1339 | 1352 | 1314 | 1337 |
| [C] after treatment (mass%) | 3.41 | 3.39 | 3.42 | 3.40 | 3.38 | 3.12 | 3.45 | 3.43 |
| [P] after treatment (mass%) | 0.013 | 0.012 | 0.014 | 0.018 | 0.017 | 0.022 | 0.018 | 0.016 |

The CaO/O ratio was 5.4 in Example 1, and it was 15.5 in Example 2 in the present invention. The [P] concentration subsequent to dephosphorization could stably be made up to 0.014% without using fluorite as a dephosphorizing flux in both examples.

Comparative Example 1 was an instance that was conducted in a conventionally employed CaO/O ratio region. Comparative Example 1 was conducted in the same manner as in the Examples of the present invention except that the CaO/O ratio was made 0.87. Because the CaO/O ratio was low, an amount of CaO as a blown flux was small, and the unit requirement of lump of burnt lime became 12.6 kg/ton. In order to attain a target [P] concentration without causing poor slag formation, fluorite had to be added in an amount of 0.5 kg/ton. The refining could not be conducted without using fluorite.

In Comparative Example 2 or 3, the (T. Fe + MnO) concentration in the slag after dephosphorization was intentionally deviated from a conventionally used range by adjusting a height of the top-blowing lance. Because the (T. Fe + MnO) concentration was made 7% in Comparative Example 2, slag formation was poor, and the target [P] concentration could not be attained even by adding fluorite. In Comparative Example 3, because the (T. Fe + MnO) concentration was made 40%, CaO was diluted, and the target [P] concentration could not be attained though slag formation was good.

Comparative Example 4 and 5 are Comparative Examples wherein the solid oxygen proportion was varied. In Comparative Example 4, the solid oxygen proportion was lowered to 4%, and the top-blown oxygen proportion was increased. As a result, the hot metal temperature subsequent to dephosphorization was raised to 1,352°C to lower the dephosphorizing capability, and the target [P] concentration could not be attained. At the same time, an increase in the top-blown oxygen made the decarbonization of the hot metal proceed during dephosphorization. In Comparative Example 5, because the top-blown oxygen proportion was lowered by increasing the solid oxygen proportion to 50%, the calorific value produced by the top-blown oxygen was decreased, and the hot metal temperature after dephosphorization was lowered to 1,314°C. Because fluorite was not added, slag formation was poor, and the target [P] concentration could not be attained.

In Comparative Example 6, the unit requirement of lump of burnt lime was made 5.4 kg/ton, the same as in Example 1 of the present invention, and the CaO/O ratio was made 1.49, and was outside the range of the invention, in order to prevent poor slag formation. As a result, the solid oxygen proportion became 26%. However, the hot metal temperature subsequent to dephosphorization was adjusted to 1,337°C by adjusting a converter post-combustion ratio and the like. Because the CaO/O ratio was outside the range of the invention, the dephosphorizing capability was lowered, and the target [P] concentration could not be attained.

A refining operation was conducted under the same conditions as in Example 1 or Comparative Example 2 while 20 charges were being continuously processed, respectively. It has consequently been confirmed that the melt loss amount was decreased by 20% in Example 1 of the invention in which fluorite was not used in comparison with Comparative Example 2 in which fluorite was used. The procedure of Example 1 was useful for decreasing the cost of the refractories.

### Industrial Applicability

During dephosphorizing a hot metal by top blowing oxygen and injecting a flux by bottom blowing using a refining vessel having a top-and-bottom-blowing function, the present invention has made it possible to conduct excellent dephosphorization without using fluorite by blowing a flux into a hot metal in such a manner that the ratio (CaO/O) of a mass of CaO in the flux to a total mass of oxygen contained in iron oxide in the flux and in a carrier gas becomes not less than 2.5. As a result, the process has permitted decreasing the loss amount of refractories, and cutting the cost thereof.

The present invention has also made it possible to easily control the hot metal temperature during dephosphorization by making the proportion of the solid oxygen to the entire oxygen to be added fall in the range from 5 to 40%.

Stabilized dephosphorization can be performed in the present invention by making the CaO/SiO₂ ratio in the slag at the time of finishing dephosphorization fall in the range up to 2.5 and the sum of the iron component in iron oxide in the slag and the manganese oxide concentration (T. Fe + MnO) fall in the range from 15 to 35%.

## Claims

1. A process for dephosphorizing a hot metal, using a top-and-bottom-blowing converter type refining vessel having bottom blowing tuyeres, wherein oxygen is top blown into a hot metal, and a flux containing, as a major component a component that is one or at least two substances selected from burnt lime, limestone and iron oxide and that contains at least iron oxide is injected thereinto by bottom blowing with oxygen, an inert gas or a mixture of the two gases used as a carrier gas, **characterized in that** the process includes the step of blowing the flux into a hot metal in such a manner that the ratio of a mass of CaO in the blown flux to a total mass of oxygen (CaO/O) contained in iron oxide in the blown flux and in the carrier gas exceeds 2.5.

2. The process for dephosphorizing a hot metal according to claim 1, wherein the proportion of oxygen contained in iron oxide contained in the solid oxygen sources based on the entire oxygen added falls in a range from 5 to 40% by mass.

3. The process for dephosphorizing a hot metal according to claim 1 or 2, wherein the CaO/SiO₂ ratio in the slag at the time of finishing dephosphorization is made to fall in a range up to 2.5, and the sum of the iron component of iron oxide and the concentration of manganese oxide (T. Fe + MnO) in the slag is made to fall in a range from 15 to 35% by mass.

4. The process for dephosphorizing a hot metal according to any one of claims 1 to 3, wherein fluorite is not used for the flux.

## Patentansprüche

1. Ein Verfahren zur Entphosphorisierung eines heißen Metalls unter Verwendung eines Frischgefäßes vom Konverter-Typ, in das von oben und von unten eingeblasen werden kann und das am Boden angeordnete Blasdüsen aufweist, wobei Sauerstoff in ein heißes Metall von oben eingeblasen wird, und ein Flussmittel, das als eine Hauptkomponente eine Komponente enthält, die ein oder mindestens zwei Substanzen enthält, ausgewählt aus gebranntem Kalk, Kalk und Eisenoxid, und die mindestens Eisenoxid enthält, von unten mit Sauerstoff mit einem Inertgas oder mit einem Gemisch der beiden Gase, die als Trägergas verwendet werden, eingeblasen wird, **dadurch gekennzeichnet, dass** das Verfahren den Schritt des Einblasens des Flussmittels in ein heißes Metall in einer solchen Weise umfasst, dass das Verhältnis der Masse von CaO in dem eingeblasenen Flussmittel zu der Gesamtmasse an Sauerstoff (CaO/O), die im Eisenoxid in dem eingeblasenen Flussmittel und in dem Trägergas enthalten ist, 2,5 überschreitet.

2. Das Verfahren zur Entphosphorisierung eines heißen Metalls gemäß Anspruch 1, wobei der Anteil an Sauerstoff, der im Eisenoxid enthalten ist, das in den festen Sauerstoffquellen enthalten ist, bezogen auf den gesamten zugegebenen Sauerstoff in einem Bereich von 5 bis 40 Masse-% liegt.

3. Das Verfahren zur Entphosphorisierung eines heißen Metalls gemäß Anspruch 1 oder 2, wobei das CaO/SiO₂ Verhältnis in der Schlacke zum Zeitpunkt des Beendens der Entphosphorisierung in einen Bereich von bis zu 2,5 gebracht wird, und die Summe der Eisenkomponente des Eisenoxids und der Konzentration von Manganoxid (T. Fe + MnO) in der Schlacke in einen Bereich von 15 bis 35 Masse-% gebracht wird.

4. Das Verfahren zur Entphosphorisierung eines heißen Metalls gemäß einem der Ansprüche 1 bis 3, wobei Fluorit nicht als Flussmittel benutzt wird.

## Revendications

1. Procédé de déphosphoration d'un métal chaud utilisant une cuve de raffinage de type convertisseur à soufflage en haut-et-en fond présentant des tuyères de soufflage de fond, dans lequel de l'oxygène est soufflé en haut dans un métal chaud, et un fondant contenant comme constituant principal un constituant qui est un ou au moins deux substances choisies parmi de la chaux calcinée, du calcaire et de l'oxyde de fer et qui contient au moins de l'oxyde de fer est injecté dans celui-ci par un soufflage de fond avec de l'oxygène, un gaz inerte ou un mélange des deux gaz utilisé comme gaz porteur, **caractérisé en ce que** le procédé comprend l'étape de soufflage du fondant dans un métal chaud de telle sorte que le rapport massique de CaO dans le fondant soufflé à la masse totale d'oxygène (CaO/O) contenu dans l'oxyde de fer dans le fondant soufflé et dans le gaz porteur excède 2,5.

2. Procédé de déphosphoration d'un métal chaud selon la revendication 1, dans lequel la proportion d'oxygène contenu dans l'oxyde de fer contenu dans les sources d'oxygène solides rapportée à la totalité d'oxygène ajouté se trouve dans un intervalle de 5 à 40 % en masse.

3. Procédé de déphosphoration d'un métal chaud selon la revendication 1 ou 2, dans lequel le rapport CaO/SiO₂ dans la scorie au moment de la fin de la déphosphoration se trouve dans un intervalle allant jusqu'à 2,5, et la somme du constituant de fer de l'oxyde de fer et de la concentration d'oxyde de manganèse (T. Fe + MnO) dans la scorie se trouve dans un intervalle de 15 à 35 % en masse.

4. Procédé de déphosphoration d'un métal chaud selon l'une quelconque des revendications 1 à 3, dans lequel on n'utilise pas de fluorite pour le fondant.
